# EUROPÄISCHE PATENTSCHRIFT

(11) **EP 0 907 847 B1**
(45) Veröffentlichungstag und Bekanntmachung des Hinweises auf die Patenterteilung: **06.12.2000**
(21) Anmeldenummer: 97926999.0
(22) Anmeldetag: 11.06.1997
(51) Int. Cl.: F16J 15/06, F16L 23/00

(54) **SEGMENT FÜR EINE DICHTUNGSANORDNUNG**
SEGMENT FOR A SEAL
SEGMENT POUR UNE GARNITURE D'ETANCHEITE

(30) Priorität: 26.06.1996 DE 29611172 U
(43) Veröffentlichungstag der Anmeldung: 14.04.1999
(73) Patentinhaber: Jung, Alfred, 50935 Köln (DE)
(72) Erfinder: Jung, Alfred, 50935 Köln (DE)
(74) Vertreter: Werner, Hans-Karsten, Dr.Dipl.-Chem.
(86) Internationale Anmeldenummer: DE9701174
(87) Internationale Veröffentlichungsnummer: WO9749939

(56) Entgegenhaltungen:
- CH-A- 528 040
- DE-U- 9 405 913
- DE-U- 29 506 929
- US-A- 3 781 043

## Beschreibung

Die Erfindung betrifft ein Segment für eine Dichtungsanordnung nach dem Oberbegriff des Anspruchs 1.

Die DE 295 06 929 U betrifft eine Zentriervorrichtung für die Dichtung einer Flanschverbindung mit einer flachen Zentrierscheibe, die am äußeren Rand der flachen Dichtung befestigt ist, bei der ein Hebel vorgesehen ist, der relativ schmal ausgebildet ist, wobei dieser Hebel mit der Zentrierscheibe in Eingriff bringbar ist und sich dabei an zwei Stützstellen der Zentrierscheibe an dieser abstützt, so dass die Zentrierscheibe von dem Hebel nur in Zentrierrichtung bewegbar ist und dass sich der Hebel von der Zentrierscheibe ausklinkt, wenn er entgegen der Zentrierrichtung bewegt wird.

Die CH 528 040 A beschreibt einen Zentrierring für zwischen zwei Flansche einzubauende, flanschlose Armaturen, welcher konzentrisch zur Ein- und Auslassöffnung am Armaturengehäuse vorgesehen ist, während die Umfangkante des Zentrierringes an den Verbindungsschrauben der Flansche justierend zur Anlage kommt, wobei der Zentrierring an seinem Umfang mit einer der Anzahl der Flanschschrauben angepassten Anzahl radialer Nocken versehen ist. Diese Nocken sind in einem Stück mit dem Zentrierring hergestellt.

Die US-A- 3 781 043 beschreibt eine Dichtung, die als Standard von einer Serie von mindestens drei Druckbereichen einsetzbar ist. Auch hier sind die Nocken fest mit dem Ring verbunden und sind obendrein nur montierbar, nachdem alle Schrauben bis auf eine entfernt worden sind.

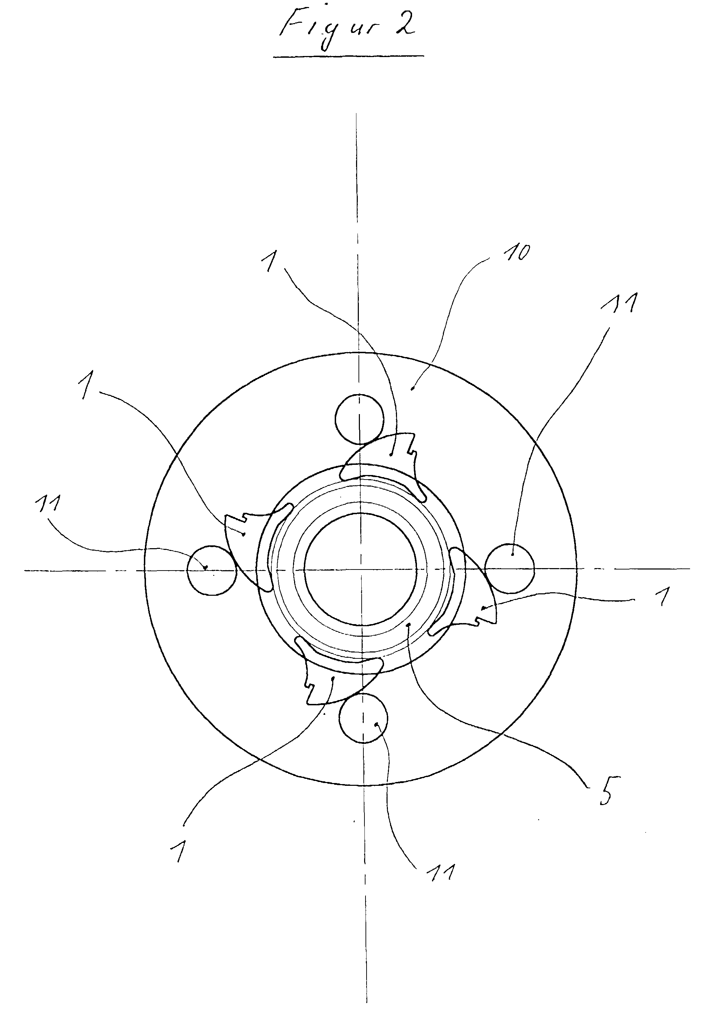

Ein Segment gemäss Oberbegriff des Anspruchs 1 geht aus dem DE-U-94 05 913 hervor. Mehrere solcher Segmente sind an einem flachen, kreisringförmigen Dichtungsring angeordnet. Wie Fig. 2 des genannten Gebrauchsmusters zeigt, sind dort vier Segmente gleichmäßig am Umfang verteilt angeordnet. Die vier Segmente sind einstückig mit einem Zentrierring verbunden, der wiederum an dem Dichtungsring befestigt ist. Der Zentrierring kann aber auch lose in einer Ringnut, die am äußeren Umfang des Dichtungsrings umläuft, geführt sein und auf diese Weise mit dem Dichtungsring verbunden sein. Der Dichtungsring bildet so zusammen mit dem Zentrierring und den vier Segmenten eine Dichtungsanordnung, wobei die Segmente und der Zentrierring ein einstückiges Bauteil bilden.

Mit dieser Anordnung ist es möglich, den Dichtungsring beim Einbau zwischen den beiden ebenen Dichtflächen der Flansche zu zentrieren. Soll also z.B. eine Flanschverbindung eines bestimmten vorgegebenen Nenndurchmessers und einer bestimmten Druckstufe hergestellt werden, so ist die Dichtungsanordnung zwischen die beiden Dichtflächen zu legen und vier Flanschschrauben durch gegenüberliegende Löcher der Flansche zu stecken. Die Schrauben liegen dabei auf vier Radien, die um 90 Grad versetzt sind. Man dreht nun die Dichtungsanordnung so weit, bis die gekrümmten Konturen der Segmente an den Schrauben gleichzeitig zur Anlage kommen. Auf diese Weise lässt sich der Dichtungsring zentrieren. Liegt beim selben Nenndurchmesser des Flansches eine höhere Druckstufe vor, so haben die Schrauben einen größeren Abstand vom Mittelpunkt; sie liegen also auf einem größeren Lochkreisdurchmesser. Liegt beim selben Nenndurchmesser eine niedrigere Druckstufe vor, so ist der Lochkreisdurchmesser kleiner. So gibt es z.B. bei einem bestimmten Flanschdurchmesser und bei Druckstufen von PN 10 bis PN 400 neun verschiedene Lochkreisdurchmesser. Obwohl verschiedene Druckstufen vorliegen können, kann dennoch dieselbe Dichtungsanordnung verwendet werden.

Der Außendurchmesser eines Dichtungsrings darf nicht größer sein als der Durchmesser, auf dem die Innenkanten der Flanschschrauben liegen. Der dazugehörige Lochkreisdurchmesser gehört zur niedrigsten Druckstufe. Alle größeren Lochkreisdurchmesser gehören zu größeren Druckstufen. Die größte vorkommende Druckstufe ist somit dem größten Lochkreisdurchmesser zugeordnet. Schrauben, die durch diesen Lochkreisdurchmesser hindurchtreten, müssen auch noch an den gekrümmten Flanken der Segmente zur Anlage kommen können. Dadurch ergibt sich der Außendurchmesser der Dichtungsanordnung.

Selbstverständlich können sich auch mehr als vier Löcher auf einem Lochkreisdurchmesser befinden. Zur Zentrierung indessen genügt es, lediglich vier gleichmäßig am Umfang verteilte Schrauben zu verwenden und die restlichen Schrauben später - also nach der Zentrierung - einzuführen und zu befestigen.

Vorteilhaft ist bei der Dichtungsanordnung nach dem Stand der Technik, dass bei einem vorgegebenen Nenndurchmesser die -gleich Dichtungsanordnung verwendbar ist unabhängig von der Druckstufe und damit vom Lochkreisdurchmesser. Nachteilig ist, dass diese Dichtungsanordnung relativ aufwendig in der Herstellung ist, denn es ist an dem Außenumfang des Dichtungsrings ein Zentrierring mit den Segmenten anzubringen, wobei der Zentrierring mit den Segmenten materialaufwendig ist. Der Zentrierring mit den Segmenten besteht aus einem gestanzten oder ausgebrannten Teil. Der Nachteil des Zentrierrings, der einstückig mit den Segmenten verbunden ist, ist der hohe Preis bedingt durch hohe Zeitkosten beim Ausbrennen oder die hohen Stanzkosten durch die teuren Werkzeuge. Außerdem muss für jede Nennweite ein eigenes Werkzeug vorhanden sein, was die Dichtungsanordnung wesentlich verteuert.

Der Erfindung liegt daher die Aufgabe zugrunde, eine Dichtungsanordnung zu schaffen, die wesentlich kostengünstiger herstellbar ist.

Zur Lösung dieser Aufgabe dienen die Merkmale des Anspruchs 1.

Zweckmäßige Weiterbildungen der Erfindung sind in den Abhängigen Ansprüchen beschrieben.

Die Dichtungsanordnung wird nun aus dem Dichtungsring und vier flachen Segmenten gebildet, die gleichmäßig am Umfang verteilt an diesem befestigt sind. Ein Segment hat im wesentlichen eine dreieckförmige Gestalt, wobei die Seiten drei Flanken des Segments bilden.

Die erste Flanke hat einen gekrümmten Verlauf und dient als Zentrierflanke, die beim Zentrieren zur Anlage an eine Schraube kommt. Die Krümmung entspricht im wesentlichen der Form eines Kreisbogens; sie kann aber auch spiralig sein.

Die zweite Flanke dient als Angriffspunkt zur Drehung der Dichtungsanordnung. Hierzu verwendet man zweckmäßig einen Stift, der einenends an der zweiten Flanke angreift und anderenends nach außen aus den beiden Flanschen hervorragt, so dass er mit der Hand ergriffen werden kann und die Dichtungsanordnung gedreht werden kann. Der Angriffspunkt des Stiftes an der zweiten Flanke lässt sich verschieden gestalten, z.B. kann das Ende des Stifts gabelförmig mit zwei kurzen Armen ausgebildet sein, die die Außenkante der zweiten Flanke klemmend ergreifen. Zu diesem Zweck kann die Außenkante der zweiten Flanke verjüngend nach außen verlaufen und die Gabel am Stift kann ebenfalls eine Verjüngung aufweisen, so dass sich eine gute Klemmwirkung ergibt. Die zweite Flanke kann aber auch zwei in Umfangsrichtung hintereinander liegende Anlageflächen haben, zwischen die ein Stift eingeführt werden kann. Der Stift lässt sich dann von außen zwischen die beiden Anlageflächen einführen. Auch auf diese Weise gelangt man problemlos zwischen die beiden Flansche und kann die Dichtungsanordnung drehen, bis die ersten Flanken an den vorher eingeführten Schrauben zur Anlage kommen.

Mit der dritten Flanke wird das Segment an dem Dichtungsring befestigt. Die dritte Flanke kann die Form eines Kreisbogens haben und dabei über die gesamte Länge der dritten Flanke an dem Außenumfang des Dichtungsrings zur Anlage kommen und an diesem befestigt werden. Dann sind aber für jeden vorkommenden Außendurchmesser des Dichtungsrings eigene Segmente herzustellen. Besteht die dritte Flanke aus zwei im wesentlichen geraden Schenkeln, die einen stumpfen Winkel bilden, so ist das Segment an zwei Punkten des Außendurchmessers des Dichtungsrings in Anlage bringbar. Diese Ausgestaltung hat den Vorteil, dass die dritte Flanke an Dichtungsringe unterschiedlicher Durchmesser anlegbar ist. Mit größer werdendem Durchmesser des Dichtungsrings liegen die Anlagepunkte weiter auseinander, bei geringerem Durchmesser liegen sie näher beieinander. Es sind aber auch andere Formen der dritten Flanken denkbar.

Wesentlich ist, dass eine gute Befestigung des Segmentes an dem Dichtungsring erzielbar ist.

Segmente dieser Art sind nun gleichmäßig am Umfang verteilt unmittelbar am Dichtungsring zu befestigen. Bezüglich der Befestigungsart des Segmentes sind verschiedene Varianten denkbar. So kann das Segment an einzelnen Punkten angeschweißt werden. Dies bietet sich an, wenn die dritte Flanke z.B. an zwei Punkten anliegt. Das Segment kann aber auch durch Klemmwirkung am Dichtungsring gehalten werden. Zu diesem Zweck lässt man z.B. den Dichtungsring sich im Bereich des Außenumfanges verjüngen und das Segment weist an der dritten Flanke eine Nut auf, die sich ebenfalls von der Flanke weg verjüngt. So lässt sich das Segment außen auf den Dichtungsring aufstecken. Es kann aber auch am Außenumfang des Dichtungsrings eine Ringnut vorgesehen sein, in die die Segmente einsteckbar sind, wobei wiederum auf eine gute Klemmwirkung zu achten ist, was sich durch entsprechende Passungsmaße erreichen lässt. Vorteilhaft ist bei Klemmverbindungen, dass die Segmente nach dem Einbau des Dichtrings und nach der Zentrierung sich vorn Dichtring abtrennen lassen (z.B. mit Hilfe eines Meißels), um bei einem anderen Dichtungsring wieder verwendet zu werden. Bei der Montage der Segmente auf dem Dichtungsring ist darauf zu achten, dass der 90° Grad -Winkel der Radien, auf denen die Segmente liegen sollen, und der Abstand der Segmente vom Mittelpunkt des Dichtungsrings genau eingehalten wird, da hiervon die Genauigkeit der Zentrierung abhängt.

Durch die Verwendung von Segmenten lassen sich die Kosten für das Stanzwerkzeug wesentlich verringern, da nicht mehr ein relativ großer Zentrierring mit an diesem befestigten Segmenten auszustanzen oder auszubrennen ist. Es sind bei Anwendung der Erfindung nur noch relativ kleine Segmente auszustanzen oder auszubrennen. Die Materialeinsparung ist beträchtlich und die Stanzwerkzeuge sind kleiner und damit billiger.

Wählt man für die dritte Flanke, zwei Schenkel, die einen stumpfen Winkel bilden, so kann ein Segment sowohl für mehrere Druckstufen aber auch für mehrere Nennweiten verwendet werden. Man benötigt also bei verschiedenen Nennweiten nicht verschiedene Zentrierringe, sondern kann mit denselben Segmenten durch Anbringen an verschiedene Dichtungsringe verschiedener Nenndurchmesser Dichtungsanordnungen verschiedener Nenndurchmesser und Nenndrücke herstellen. Dadurch lassen sich die Herstellungskosten zusätzlich verringern.

Die Erfindung soll im folgenden näher erläutert werden. Es zeigen:

Fig. 1; ein Segment, das am Umfang eines Dichtungsrings befestigt ist.

Fig. 2: eine Dichtungsanordnung, die an den Schrauben eines Flansches zur Zentrierung anliegt.

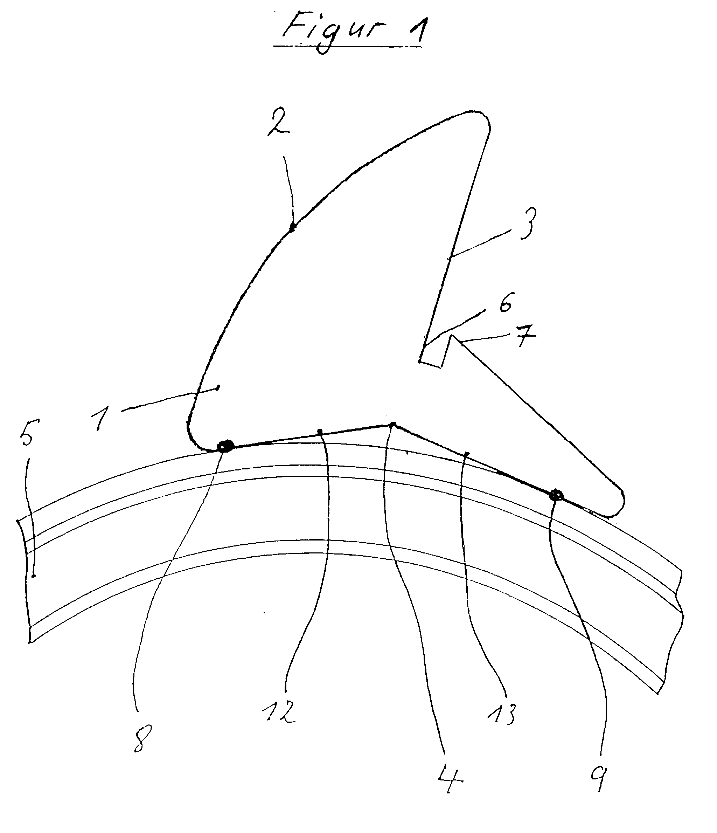

In Fig. 1 ist ein flaches Segment (1) mit den drei Flanken (2,3 und 4) dargestellt, das an einem Dichtungsring (5) befestigt ist. Die erste Flanke (2) stellt die Zentrierflanke dar und hat einen gekrümmten Verlauf Die Form kann z.B. der Form eines Kreisbogens entsprechen oder spiralförmig sein. An der zweiten Flanke (3) greift ein Stift an (nicht dargestellt), der von außen zwischen den beiden Flanschen einzuführen ist und innen entweder klemmend oder formschlüssig mit der zweiten Flanke verbunden wird. Fig. 1 zeigt die zweite Flanke bei formschlüssiger Verbindungsmöglichkeit von Segment und Stift. In diesem Fall sind zwei Anlageflächen (6,7) in Umfangsrichtung hintereinander liegend vorgesehen, zwischen die der Stift einzuführen ist. Nach Einführung lässt sich der Stift zusammen mit der Dichtungsanordnung um deren Achse drehen bis die ersten Flanken zur Anlage an die Schrauben kommen und damit die Dichtungsanordnung zentriert ist. Die dritte Flanke (4) besteht aus zwei geraden Schenkeln (12,13), die einen Winkel ausbilden und zwei Punkten (8,9), die an dem äußeren Umfang des Dichtungsrings (5) anliegen und an den Berührungspunkten angeschweißt sind.

In Fig. 2 ist der in einem Flansch (10) zentrierte Dichtungsring (5) gezeigt. Vier Segmente (1) liegen mit ihren gekrümmten Flanken an vier Schrauben (11) an.

## Patentansprüche

1. Segment für eine Dichtungsanordnung, das flach ausgebildet ist, das eine erste Flanke (2) als Zentrierflanke aufweist, die einen gekrümmten Verlauf hat, das eine zweite Flanke (3) aufweist, die als Angriffspunkt für einen Stift dient, mit dem das Segment um die Achse der Dichtungsanordnung drehbar ist, und das am Umfang eines Dichtungsrings (5) befestigbar ist, dadurch gekennzeichnet, dass das Segment (1) als Einzelteil ausgebildet ist und im wesentlichen eine dreieckförmige Gestalt aufweist, wobei die Dreiecksseiten drei Flanken (2,3 und 4) des Segmentes bilden, dass die dritte Flanke (4) an den Umfang des Dichtungsrings angepasst ist, so dass das Segment über die dritte Flanke (4) an dem Dichtungsring (5) befestigbar ist.

2. Segment nach Anspruch 1, dadurch gekennzeichnet, dass die zweite Flanke (3) zwei Anlageflächen (6,7) für einen einzuführenden Stift aufweist, die im wesentlichen radial verlaufen und in Umfangsrichtung beabstandet hintereinander liegen.

3. Segment nach Anspruch 1, dadurch gekennzeichnet, dass die zweite Flanke (3) einen Bereich aufweist, der sich nach außen verjüngt, so dass er in Klemmwirkung mit eine Stift bringbar ist, der gabelförmig ausgebildet ist und dessen Bereich zwischen den Gabelarmen ebenfalls verjüngen ausgebildet ist.

4. Segment nach mindestens einem der vorangegangenen Ansprüche, dadurch gekennzeichnet, dass die dritte Flanke (4) die Form eines Kreisbogens hat, der dem Außenumfang des Dichtungsrings (5) entspricht.

5. Segment nach mindestens einem der vorangegangenen Ansprüche, dadurch gekennzeichnet, dass die dritte Flanke (4) aus zwei im wesentlichen geraden Schenkeln (12,13) besteht, die einen stumpfen Winkel bilden, wobei die dritte Flanke (4) an zwei Punkten (8,9) mit dem Außenumfang des Dichtungsrings (5) in Anlage bringbar ist und am Dichtungsring befestigbar ist.

## Claims

1. A segment for a sealing arrangement, the segment having a flat shape and comprising a first flank (2) provided as a centering flank with a curved shape, and a second flank (3) serving as a point of attack for a pin for rotating the segment about the axis of the sealing arrangement, the segment further being adapted for attachment on the circumference of a sealing ring (5),
characterized in that the segment (1) is formed as a one-pieced unit and has a substantially triangular shape, with the sides of the triangle forming three flanks (2, 3 and 4) of the segment, and that the third flank (4) is adapted to the circumference of the sealing ring in a manner allowing the segment to be attached to the sealing ring (5) by the third flank (4).

2. The segment according to claim 1, characterized in that the second flank (3) comprises two abutment faces (6, 7) for insertion of a pin, the abutment faces extending substantially radially and, when viewed in the circumferential direction, being arranged in series with each other at a mutual distance.

3. The segment according to claim 1, characterized in that the second flank (3) comprises a portion tapering towards the outside to be brought into clamping engagement with a pin, the pin being forked and the portion of the pin between the fork arms being likewise of a tapered shape.

4. The segment according to at least one of the preceding claims, characterized in that the third flank (4) has the shape of a circular arc corresponding to the outer circumference of the sealing ring (5).

5. The segment according to at least one of the preceding claims, characterized in that the third flank (4) comprises an obtuse angle formed by two substantially linear legs (12, 13), the third flank (4) being adapted to abut the outer circumference of the sealing ring (5) on two points (8, 9) and to be attached to the sealing ring.

## Revendications

1. Segment pour un dispositif de joint d'étanchéité, réalisé plat, qui possède, comme flanc de centrage, un premier flanc (2) présentant un tracé courbe, et qui présente un deuxième flanc (3) servant de point d'engagement pour une broche avec laquelle on peut faire tourner le segment autour de l'axe du dispositif de joint d'étanchéité, et qui peut être fixé sur la périphérie d'une bague d'étanchéité (5),
caractérisé en ce que le segment (1) est réalisé en formant une seule pièce et présente essentiellement une forme triangulaire, les côtés du triangle formant trois flancs (2, 3 et 4) du segment, en ce que le troisième flanc (4) est ajusté à la périphérie de la bague d'étanchéité, de sorte que le segmenL peut être fixé, par le troisième flanc (4), à la bague d'étanchéité (5).

2. Segment suivant la revendication 1, caractérisé en ce que le deuxième flanc (3) présente, pour l'introduction d'une broche, deux surfaces d'appui (6, 7) de direction essentiellement radiale et placées à une certaine distance l'une derrière l'autre suivant la direction périphérique.

3. Segment suivant la revendication 1, caractérisé en ce que le deuxième flanc (3) présente une zone se rétrécissant vers l'extérieur, de façon à pouvoir créer un effet de prise avec une broche, qui est réalisée en forme de fourche et dont la zone entre les bras de la fourche est également réalisée en se rétrécissant.

4. Segment suivant au moins l'une des revendications précédentes, caractérisé en ce que le troisième flanc (4) présente la forme d'un arc de cercle, qui correspond au contour périphérique de la bague d'étanchéité (5).

5. Segment suivant au moins l'une des revendications précédentes, caractérisé en ce que le troisième flanc (4) est constitué de deux parties (12, 13) essentiellement droites, formant un angle obtus, le troisième flanc (4) pouvant, en deux points (8, 9), être mis en contact avec la périphérie de la bague d'étanchéité (5) et être fixé sur cette bague d'étanchéité.
